# EUROPÄISCHE PATENTANMELDUNG

(11) **EP 2 551 007 A1**
(43) Veröffentlichungstag der Anmeldung: **30.01.2013**
(21) Anmeldenummer: 11175925.4
(22) Anmeldetag: 29.07.2011
(51) Int. Cl.: B01D 53/14, B01D 53/62, F23J 15/04

(54) **Absorptionsflüssigkeit, Verfahren zur Herstellung einer Absorptionsflüssigkeit, Verfahren zur Aktivierung eines Lösungsmittels und Verwendung der Absorptionsflüssigkeit**

(71) Anmelder: SIEMENS AKTIENGESELLSCHAFT, 80333 München (DE)
(72) Erfinder: Fischer, Björn, 60318 Frankfurt a.M. (DE); Kuettel, Diego Andres, 65934 Frankfurt am Main (DE); Joh, Ralph, 63500 Seligenstadt (DE); Kinzl, Markus, 63128 Dietzenbach (DE); Schneider, Rüdiger, 65817 Eppstein (DE)

(57) **Zusammenfassung**

Die Erfindung betrifft eine Absorptionsflüssigkeit (19) zur selektiven Absorption von CO₂ aus dem Rauchgas einer Verbrennungsanlage. Die Absorptionsflüssigkeit (19) umfassend eine wässrige Lösung einer waschaktiven Substanz (18) auf Basis von Ethanolaminen, oder Aminosäuresalzen (7), oder Pottasche (16), oder einer Kombination daraus, und einen aktivierenden Zusatzstoff (6), wobei der aktivierende Zusatzstoff (6) ein anorganischer Katalysator (17) ist. Die Erfindung betrifft weiterhin ein Verfahren zur Bereitstellung einer Absorptionsflüssigkeit (19), ein Verfahren zur Aktivierung eines Lösungsmittels (2), sowie die Verwendung der Absorptionsflüssigkeit (19) zur selektiven Absorption von CO₂ aus dem Rauchgas einer Verbrennungsanlage.

## Beschreibung

Bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid-Emissionen muss Kohlendioxid (CO2) aus den Rauchgasen abgetrennt werden. Zur Abtrennung von Kohlendioxid aus einem Gasgemisch sind allgemein verschiedene Methoden bekannt. Insbesondere zum Abtrennen von Kohlendioxid aus einem Rauchgas nach einem Verbrennungsprozess ist die Methode der Absorption-Desorption gebräuchlich. In großtechnischem Maßstab wird Kohlendioxid (CO2) dabei mit einer Absorptionsflüssigkeit aus dem Rauchgas in einem Absorber herausgewaschen (CO2 Capture-Prozess). Das CO2 reagiert es mit der Absorptionsflüssigkeit, wodurch es in der flüssigen Phase physikalisch gelöst wird. Die Reaktion findet dabei in der Grenzschicht statt, wodurch sich in der Grenzschicht ein Konzentrationsprofil bildet. Die Absorptionsgeschwindigkeit wird dabei insbesondere von der Reaktionsgeschwindigkeit beeinflusst.

Gängige Absorptionsflüssigkeiten basieren auf primären, sekundären oder tertiären Aminen oder einer Mischung daraus und zeigen eine gute Selektivität und eine hohe Kapazität für Kohlendioxid. Bevorzugt verwendet werden derzeit Ethanolamine, Aminosäuresalze und Pottasche-Lösungen als Absorptionsmittel, da sie einen vergleichsweise niedrigeren Regenerationsenergieverbrauch haben.

Der Vorteil von sekundären Aminverbindungen (sekundäre Ethanolamine oder sekundäre Aminosäuresalze) gegenüber primären Aminverbindungen (primäre Ethanolamine oder primäre Aminosäuresalze) liegt in der deutlich niedrigeren Absorptionsenergie und der daraus resultierenden niedrigeren Regenerationsenergie, was sich in einem geringeren Wirkungsgradeinbruch des Kraftwerks bemerkbar macht. Darüber hinaus zeigen sekundäre Aminverbindungen eine höhere Beladungskapazität für CO2.

Ein Vorteil der primären Aminverbindungen hingegen ist die deutlich schnellere Absorptionskinetik. Dadurch lassen sich im Vergleich zu den sekundären Aminen oder sekundären Aminosäuresalzen die Kolonnen oder Reaktoren, in denen das Kohlendioxid in der CO2 Capture-Anlage absorbiert wird, kleiner auslegen, was zu geringeren Investitionskosten führt.

Der Vorteil von Aminosäuresalzen im Vergleich zu hetrocyklischen Aminen oder Alkanolaminen ist, dass Aminosäuresalze keinen merklichen Dampfdruck aufweisen, und somit nicht verdampfen und nicht durch den CO2 Capture-Prozess in die Umwelt ausgetragen werden können. Hetrocyklische Amine und Alkanolamine sind flüchtig und werden durch das in die Umwelt emittierende Rauchgas mit ausgetragen, was zu unerwünschten Umweltbelastungen führt.

In der chemischen Industrie wird zurzeit hauptsächlich das primäre Amin MEA (Monoethanolamin) eingesetzt. Da der energetische Wirkungsgrad in der chemischen Industrie nicht im Mittelpunkt des Interesses steht, konnten hier bisher die energetischen Nachteile weites gehend vernachlässigt. In Kraftwerken zur Stromerzeugung hingegen ist gerade der Energieverbrauch des C02 Capture-Prozesses von großer Bedeutung, da er aufgrund seiner Größe einen erheblichen Einfluss auf den Gesamtwirkungsgrad des Kraftwerks hat. Diese technische Umsetzung ist aktuell Gegenstand der Forschung und Entwicklung, weshalb dieses Problem zurzeit im großen Maße optimiert wird.

Eine Aufgabe der Erfindung ist es, eine umweltverträgliche Absorptionsflüssigkeit für die Absorption von CO2 bereit zu stellen, das eine hohe Absorptionsgeschwindigkeit und gleichzeitig einen geringen Energieverbrauch bei der Regeneration aufweist. Eine weitere Aufgabe der Erfindung besteht in der Angabe eines Verfahrens zur Herstellung bzw. zur Bereitstellung einer Absorptionsflüssigkeit, durch die die Nachteile aus dem Stand der Technik vermieden werden. Weiterhin ist es Aufgabe der Erfindung eine Verwendung einer Absorptionsflüssigkeit zur selektiven Absorption von CO2 aus dem Rauchgas einer Verbrennungsanlage anzugeben bei der die Nachteile aus dem Stand der Technik vermieden werden. Zudem ist es Aufgabe der Erfindung, ein Verfahren zur Aktivierung eines umweltverträglichen Lösungsmittels anzugeben, sodass die Absorptionsgeschwindigkeit heraufgesetzt wird und der Energieverbrauch bei der Regeneration reduziert wird.

Die auf eine Absorptionsflüssigkeit gerichtete Aufgabe der Erfindung wird gelöst durch die Merkmale des Anspruchs 1. Die Absorptionsflüssigkeit ist dabei eine wässrige Lösung einer waschaktiven Substanz, die auf Basis von Ethanolaminen, Aminosäuresalzen, oder Pottasche angesetzt ist, und einen aktivierenden Zusatzstoff umfasst, wobei der aktivierende Zusatzstoff ein anorganischer Katalysator ist.

Die Erfindung geht dabei von der Überlegung aus, dass die Zugabe eines anorganischen Aktivators bzw. eines Hydratationskatalysators zu einem langsam reagierenden Lösemitteln, wie z.B. Lösungen aus tertiären Ethanolaminen, tertiären Aminosäuresalzen und Pottasche, den Stoffübergang von gasförmigem C02 in die flüssige Phase beschleunigt, und dadurch zu einer deutlich schnelleren Absorptionskinetik führt. Durch die dadurch erzielte Steigerung der Absorptionsgeschwindigkeit kann die Absorptionskolonne kleiner ausgelegt, wodurch die Investitionskosten für eine CO2 Capture-Anlage gesenkt werden können.

Der Erfindung liegt dabei insbesondere die Erkenntnis zu Grunde, dass bereits kleine Mengen eines anorganischen Aktivators ausreichen, um die Absorption von CO2 erheblich zu beschleunigen.

Durch die Verwendung eines anorganischen Zusatzstoffes, der keinen Dampfdruck aufweist bleibt das Lösungsmittel umweltneutral, da es zu keinem Austrag des Zusatzstoffes die Atmosphäre kommt.

Da der Aktivator in nur sehr kleinen Mengen zugesetzt wird, ist nicht mit einer Erhöhung der Regenerationsenergie zu rechnen. Diese kann sogar durch die Zugabe des aktivierenden Zusatzstoffes weiter reduziert werden, da eine entsprechend höhere Beladung im Absorber erreicht wird und die treibende Kraft aufgrund der erhöhten Partialdruckdifferenz im Desorber zunimmt. Somit ergeben sich sowohl Einsparungen in der Auslegung des Absorbers aufgrund der erhöhten Absorptionsgeschwindigkeit, als auch Einsparungen bei der erforderlichen Regenerationsenergie.

Als vorteilhaft hat sich ein Anteil des anorganischen Katalysators in der Absorptionsflüssigkeit von 0,01 bis 10 Gewichtsprozent erwiesen. Die Menge an anorganischem Katalysator ist jedoch möglichst gering zu halten, um mögliche negative Einflüsse anorganischen Katalysators auf die Absorptionsflüssigkeit zu minimieren. Besonders Vorteilhaft hat sich daher ein Anteil des anorganischen Katalysators in der Absorptionsflüssigkeit von 0,05 bis 2 Gewichtsprozent erwiesen. Grundsätzlich gilt dabei zu beachten, dass die anorganischen Katalysatoren nicht an der CO2 Absorption teilnehmen. Sie katalysieren die Carbamat-Wasser-Reaktion (Hydratation) und bilden dabei Bikarbonat. Der Anteil des Katalysators in der Absorptionsflüssigkeit ist daher so zu wählen, dass ein möglichst optimiertes Verhältnis der Anteile zwischen Katalysator und Waschaktiver Substanz in der Absorptionsflüssigkeit erzielt wird.

Als waschaktive Substanzen eignen sich Lösungen aus sekundären Ethanolaminen, tertiäre Ethanolaminen, bzw. sterisch gehinderte Aminosäuren. Besonders von Vorteil sind aber gerade Lösungen aus sekundären Aminosäuresalzen, tertiären Aminosäuresalzen, bzw. auch sterisch gehinderte Aminosäuresalze, da Aminosäuresalze keinen merklichen Dampfdruck haben, und somit beim CO2 Capture-Prozess nicht in die Atmosphäre ausgetragen werden. Es eignen sich Aminosäuresalze, die beispielsweise von den Aminosäuren von Sarcosine, N,N-dimethylalanine, Taurin, alpha-Alanin, betha-Alanin, N-methylalanin, Prolin, Homotaurin oder Glycin stammen.

Als anorganische Katalysatoren eignet sich besonders Metalloxide aus der Gruppe der Übergangsmetalle, wie z.B. Vanadium, Molybdän, Wolfram oder Titan, oder Metalloxide aus der Gruppe der Halbmetalle, wie z.B. Arsen oder Selen. Als anorganische Katalysatoren eigenen sich aber auch Säuren mit einer Verbindung aus der Gruppe der Halbmetalle, wie z.B. Arsen, Selen, Brom, oder aus der Gruppe der Nichtmetalle, wie z.B. Phosphor. Erfolgreiche Ergebnisse wurden dabei in Laboruntersuchungen insbesondere mit Molybdenum (VI) -oxid (MoO3) und Borsäure (H3B03) erzielt.

Die auf ein Verfahren gerichtete Aufgabe wird gelöst durch ein Verfahren zur Bereitstellung einer Absorptionsflüssigkeit für einen CO2 Capture-Prozess nach den Merkmalen des Anspruchs 7, bei dem eine wässrigen Lösung mit einer waschaktiven Substanz, bestehend aus Aminen oder Pottasche, angesetzt wird, und in die wässrigen Lösung ein aktivierender Zusatzstoff eingebracht wird, wobei der aktivierende Zusatzstoff ein anorganischer Katalysator ist.

Die auf ein Verfahren zur Aktivierung eines Lösungsmittels zur Bereitstellung einer Absorptionsflüssigkeit gerichtete Aufgabe der Erfindung wird gelöst durch die Merkmale des Anspruchs 8. Das Lösungsmittel ist dabei zunächst eine wässrige Lösung einer waschaktiven Substanz, die auf Amine und/oder Pottasche basiert. Zur Beschleunigung einer selektiven Absorption von CO2 aus dem Rauchgas einer Verbrennungsanlage wird nun ein aktivierender Zusatzstoff hinzugegeben, wobei der aktivierende Zusatzstoff ein anorganischer Katalysator ist.

Der Anteil des anorganischen Katalysators in der Absorptionsflüssigkeit wird dabei auf einen Anteil von 0,01 bis 10 Gewichtsprozent eingestellt.

Als waschaktive Substanz eigen sich sekundäre oder tertiäre Aminosäuren, und besonders sekundäre oder tertiäre Aminosäuresalze, ebenso wie sterisch gehinderte Ethanolamine oder Aminosäuresalze.

Die erfindungsgemäße Absorptionsflüssigkeit, das Verfahren zur Bereitstellung einer Absorptionsflüssigkeit, sowie das Verfahren zur Aktivierung eines Lösungsmittels kommen dabei vorzugsweise bei der Absorption von CO2 aus dem Rauchgas eines fossil befeuerten Dampfkraftwerks, aus dem Rauchgas einer Gasturbinenanlage, oder aus dem Rauchgas einer kombinierten Gas- und Dampfturbinenanlage zum Einsatz.

Die auf eine Verwendung einer Absorptionsflüssigkeit gerichtete Aufgabe der Erfindung ist gelöst durch die Merkmale des Anspruchs 12, wonach die Verwendung in der selektiven Absorption von CO2 aus dem Rauchgas einer Verbrennungsanlage besteht, wobei die Absorptionsflüssigkeit eine wässrige Lösung einer waschaktiven Substanz (18), bestehend aus Aminen oder Pottasche, und einen aktivierenden Zusatzstoff, bestehend aus einem anorganischen Katalysator, umfasst. Das Rauchgas kann dabei aus einem fossil befeuerten Dampfkraftwerk, aus einer Gasturbinenanlage, oder aus einer kombinierten Gas- und Dampfturbinenanlage entstammen.

Nachfolgend werden Ausführungsbeispiele der Erfindung anhand von Figuren näher erläutert. Darin zeigt:
- FIG 1: ein Diagramm mit dem Vergleich unterschiedlicher Absorptionsflüssigkeiten
- FIG 2: ein Reaktionsschaubild mit der Reaktion von CO2 mit einer sekundären Aminosäuresalz
- FIG 3: ein Reaktionsschaubild mit der Reaktion von CO2 mit einem sekundären Aminosäuresalz katalysiert mit einem anorganischen Katalysator
- FIG 4: die chemische Struktur von Pottasche als ein Beispiel für eine waschaktive Substanz
- FIG 5: die chemische Struktur von Aminosäuresalze als ein Beispiel für eine waschaktive Substanz
- FIG 6: ein Beispiel für einen Metalloxid- Aktivator
- FIG 7: ein Beispiel für einen Säure-Aktivator

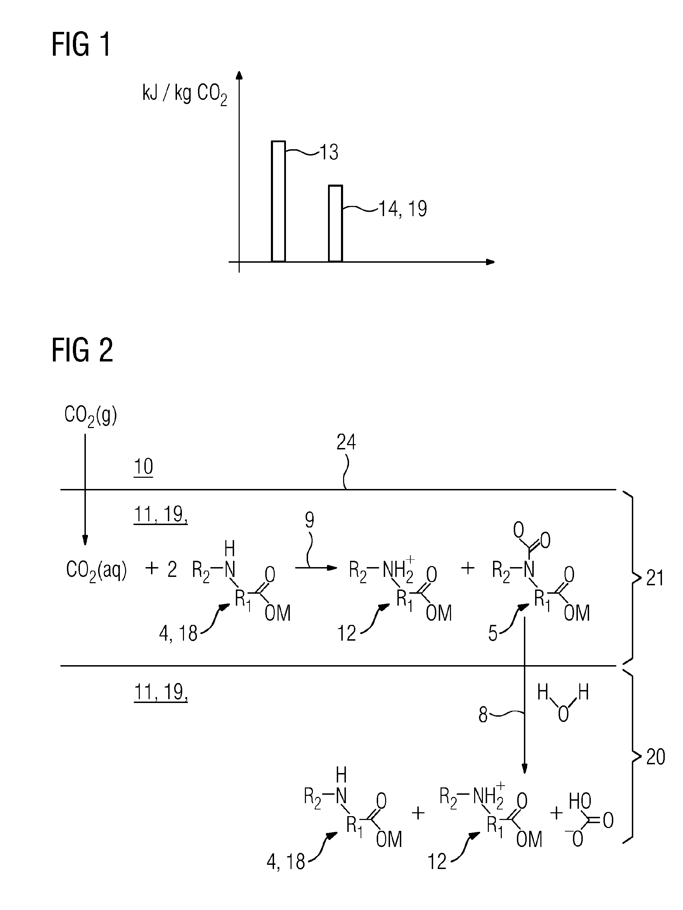

Das in FIG 1 dargestellte Diagramm zeigt die für die Abtrennung von CO2 aus einem Rauchgas erforderliche spezifische Energie in kJ pro abgetrenntem kg CO2. Die Achse ist nicht skaliert, weil die erforderliche Energie im Wesentlichen auch Abhängig ist von anderen Prozessparametern, wie Druck, Temperatur, Umpump, Rauchgasmassenstrom, auf die hier nicht näher eingegangen werden soll.

Die Balken stehen für unterschiedliche Absorptionsflüssigkeiten 13 und 14. Der linke Balken zeigt eine Absorptionsflüssigkeit 13 mit einem sekundären Aminosäuresalz als aktive Waschsubstanz. Der rechte Balken zeigt eine Absorptionsflüssigkeit 14 mit einem sekundärem Aminosäuresalz und einem Anteil eines anorganischen Katalysators als aktivierenden Zusatzstoff. Das Verhältnis bei der Absorptionsflüssigkeit 14 zwischen sekundärem Aminosäuresalz und aktiver Waschsubstanz beträgt in diesem Beispiel in Gewichtsprozenten 95:5. Dargestellt ist die spezifisch, erforderliche Leistung, die zum Abtrennen von CO2 aus einem Rauchgas erforderlich ist. Dabei wird hier unterstellt, dass sich außer der verwendeten Absorptionsflüssigkeit kein weiterer Prozessparameter ändert.

Zu erkennen ist, dass die Absorptionsflüssigkeit 14 im Vergleich zu der Absorptionsflüssigkeit 13 wesentlich weniger spezifische Energie benötigt. Das bedeutet, bei gleichbleibender Kolonnengröße zeigt die mit einem anorganischen Katalysator aktivierte Absorptionsflüssigkeit 14, eine wesentliche geringere erforderliche spezifische Energie.

FIG 2 zeigt ein Reaktionsschaubild mit dem Übergang von CO2 von der Gasphase 10 in die Grenzschicht 21 der Flüssigphase 11. Der Übergang von der Gasphase 10 in die Grenzschicht 21 ist durch die Grenzfläche 24 gegeben. In der Grenzschicht 21 reagiert das CO2 mit einem sekundären Aminosäuresalz 4 über eine schnelle Reaktion 9 zu dem Reaktionsprodukt Karbamat 5 und protonierten Aminosäuresalz 12.

Die nachfolgende Reaktion, bei der das Reaktionsprodukt weiter mit Wasser zu Bikarbonat und weiterer Reaktionsprodukte reagiert, ist aber eine langsame Reaktion 8, da sie bereits im Flüssigkeitskern 20 des Absorptionsmittels 19 erfolgt, wo sie sterisch gehindert ist, und deutlich langsamer abläuft, als die Karbamatbildung in der Grenzschicht 21.

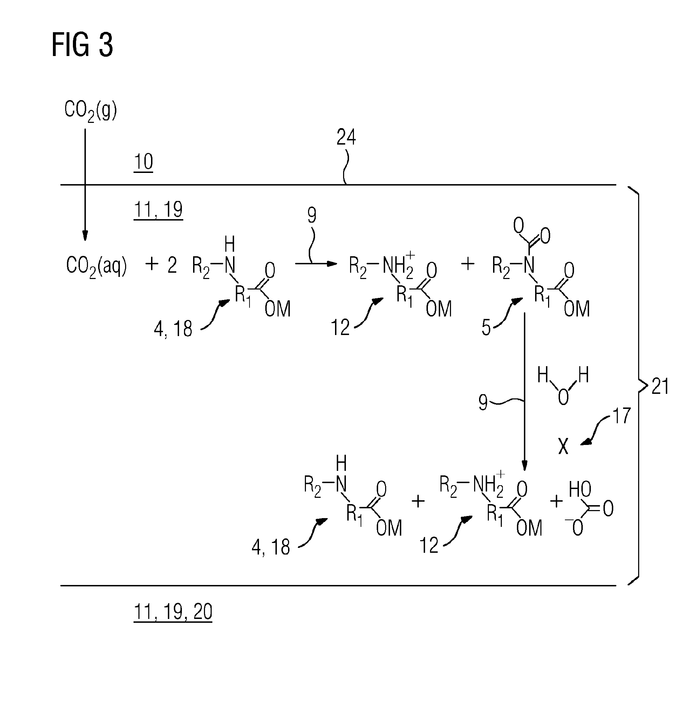

Im Vergleich zu FIG 2 zeigt FIG 3 ein Reaktionsschaubild wobei in dem Absorptionsmittel 19, neben dem sekundären Aminosäuresalz 7 als waschaktive Substanz 18, ein anorganischer Katalysator 17 enthalten ist. Gezeigt ist die Gasphase 10 und die Flüssigphase 11. Die Flüssigphase 11 unterteilt sich dabei in die Grenzschicht 21, die an die Gasphase 10 angrenzt, und den Flüssigkeitskern 20, der an die Grenzschicht 21 anschließt.

Der anorganische Katalysator bewirkt, dass die Bikarbonatbildung als schnelle Reaktion 9 abläuft. Die Bikarbonatbildung findet dabei in der Grenzschicht 21 der Flüssigphase 11, und nicht im Flüssigkeitskern 20 statt, weshalb die Bikarbonatbildung beschleunigt abläuft. Durch die schnellere Bikarbonatbildung gelangt auch das CO2 aus der Gasphase 10 schneller in die Flüssigphase 11.

Bezogen auf die Erfindung ist lediglich ein geringer Zusatz eines aktivierenden Zusatzstoffes notwendig um bereits eine erhebliche Beschleunigung des CO2 Capture-Prozesses zu erreichen. Vorteilhaft hat sich ein Anteil von weniger als 10 gewichts-% erwiesen.

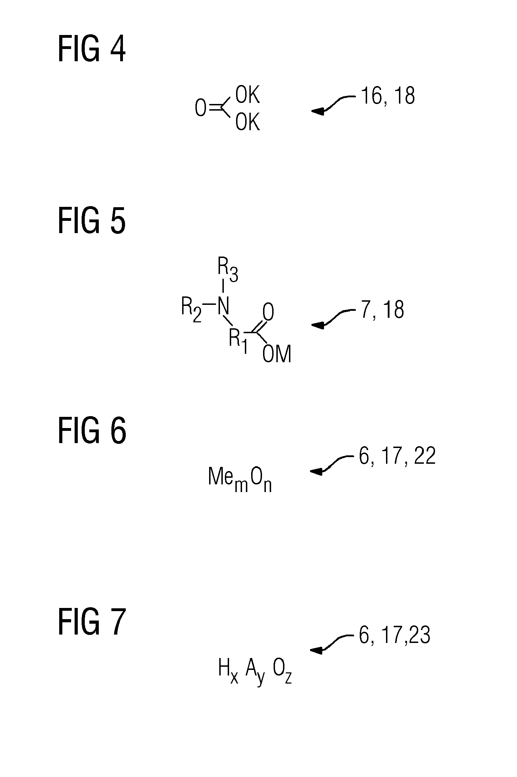

FIG 4 zeigt ein Beispiel für eine waschaktive Substanz 18. Dargestellt ist die chemische Strukturformel von Kaliumkarbonat, umgangssprachlich auch Pottasche 16 genannt.

FIG 5 zeigt ein weiteres Beispiel für eine waschaktive Substanz 18. Dargestellt ist die chemische Strukturformel einer allgemeinen Form eines Aminosäuresalzes 7, wobei O für Sauerstoff, N für Stickstoff, M für Alkalimetalle oder Erdalkalimetalle und R für einen Restsubstituenten steht. Die Restsubstituenten R1, R2 und R3 können hier für Wasserstoff H, für einen Alkyl-Rest, einen Aryl-Rest, einen AlkylarylRest, einen Heteroaryl-Rest, ein Halogen, CN oder R-COO- stehen.

Aminosäuresalze 7 eignen sich besonders vorteilhaft als waschaktive Substanz, da sie keinen merklichen Dampfdruck haben, und somit beim CO2 Capture Prozess bei der Absorption nicht mit dem Rauchgas in die Atmosphäre ausgetragen werden können.

FIG 6 zeigt einen Metealloxid-Aktivator 22 als Beispiel für einen Katalysator 17. Darin stehen O für Sauerstoff und Me für Halbmetalle oder Übergangsmetalle.

FIG 7 zeigt einen Säure-Aktivator 23 als Beispiel für einen Katalysator 17. Darin stehen H für Wasserstoff, A für Halbmetalle oder Nichtmetalle, O für Sauerstoff und m, n, x, y, z für die Nummer von Atomen.

## Patentansprüche

1. Absorptionsflüssigkeit (19) umfassend eine wässrige Lösung einer waschaktiven Substanz (18) auf Basis von Aminen, oder Ethanolaminen, oder Aminosäuresalzen, oder Pottasche, oder einer Kombination davon, und einen aktivierenden Zusatzstoff (6), wobei der aktivierende Zusatzstoff (6) ein anorganischer Katalysator (17) ist.

2. Absorptionsflüssigkeit (19) nach Anspruch 1, wobei der anorganischen Katalysator (17) einen Anteil in der Absorptionsflüssigkeit (19) von 0,01 bis 10 Gewichtsprozent ausmacht.

3. Absorptionsflüssigkeit (19) nach einem der Ansprüche 1 oder 2, wobei der anorganischen Katalysator (17) einen Anteil in der Absorptionsflüssigkeit (19) von 0,05 bis 2 Gewichtsprozent ausmacht.

4. Absorptionsflüssigkeit (19) nach einem der Ansprüche 1 oder 2, wobei die waschaktive Substanz (18) primäre, sekundäre oder tertiäre Aminosäuresalze, und/oder sterisch gehinderte Aminosäuresalze umfasst.

5. Absorptionsflüssigkeit (19) nach einem der Ansprüche 1 bis 4, wobei der anorganische Katalysator (17) ein Metalloxid (22) mit einer Verbindung aus der Gruppe der Übergangsmetalle oder aus der Gruppe der Halbmetalle ist.

6. Absorptionsflüssigkeit (19) nach einem der Ansprüche 1 bis 4, wobei der anorganische Katalysator (17) eine Säure (23) mit einer Verbindung aus der Gruppe der Halbmetalle oder aus der Gruppe der Nichtmetalle ist.

7. Verfahren zur Aktivierung eines Lösungsmittels (2) zur Bereitstellung einer Absorptionsflüssigkeit (19), wobei das Lösungsmittel (2) eine wässrige Lösung einer waschaktiven Substanz (18) auf Basis von Ethanolaminen, oder Aminosäuresalzen, oder Pottasche, oder einer Kombination davon ist, und wobei zur Beschleunigung einer selektiven Absorption von CO2 aus dem Rauchgas einer Verbrennungsanlage ein aktivierender Zusatzstoff (6) hinzugegeben wird, wobei der aktivierende Zusatzstoff (6) ein anorganischer Katalysator (17) ist.

8. Verfahren nach Anspruch 7, bei dem der anorganische Katalysator (17) in der Absorptionsflüssigkeit (19) auf einen Anteil von 0,01 bis 10 Gewichtsprozent eingestellt wird.

9. Verfahren nach einem der Ansprüche 7 bis 8, bei dem die waschaktive Substanz (18) primäre, sekundäre oder tertiäre Aminosäuresalze, und/oder sterisch gehinderte Aminosäuresalze umfasst.

10. Verfahren nach einem der Ansprüche 7 bis 9, bei dem als anorganischer Katalysator (17) ein Metalloxid (22) mit einer Verbindung aus der Gruppe der Übergangsmetalle oder aus der Gruppe der Halbmetalle oder eine Säure (23) mit einer Verbindung aus der Gruppe der Halbmetalle oder aus der Gruppe der Nichtmetalle eingebracht wird.

11. Verfahren nach einem der Ansprüche 8 bis 10, bei der die Absorption von CO2 aus dem Rauchgas eines fossil befeuerten Dampfkraftwerks, aus dem Rauchgas einer Gasturbinenanlage, oder aus dem Rauchgas einer kombinierten Gas- und Dampfturbinenanlage erfolgt.

12. Verwendung einer Absorptionsflüssigkeit (19) zur selektiven Absorption von CO2 aus dem Rauchgas einer Verbrennungsanlage, wobei die Absorptionsflüssigkeit (19)
- eine wässrige Lösung einer waschaktiven Substanz (18), bestehend aus Ethanolaminen, oder Aminosäuresalzen, oder Pottasche, oder einer Kombination daraus, und
- einen aktivierenden Zusatzstoff (6), bestehend aus einem anorganischen Katalysator (17), umfasst.

13. Verwendung nach Anspruch 11, bei der die Absorption von CO2 aus dem Rauchgas eines fossil befeuerten Dampfkraftwerks, aus dem Rauchgas einer Gasturbinenanlage, oder aus dem Rauchgas einer kombinierten Gas- und Dampfturbinenanlage erfolgt.

14. Verfahren zur Herstellung einer Absorptionsflüssigkeit (19) für eine CO2 Capture-Prozess, bei dem
a) eine wässrigen Lösung mit einer waschaktiven Substanz (18), bestehend aus Ethanolaminen, oder Aminosäuresalzen (7), oder Pottasche (16), oder einer Kombination daraus angesetzt wird, und
b) in die wässrigen Lösung ein aktivierender Zusatzstoff (6) eingebracht wird, wobei der aktivierende Zusatzstoff (6) ein anorganischer Katalysator (17) ist.
